(19) Europäisches Patentamt / European Patent Office / Office européen des brevets

(11) **EP 1 894 800 B1**

(12) **FASCICULE DE BREVET EUROPEEN**

(45) Date de publication et mention
de la délivrance du brevet:
**08.12.2010 Bulletin 2010/49**

(51) Int Cl.:
**B60T 8/172** *(2006.01)*      **B60T 8/1755** *(2006.01)*
**B60T 8/24** *(2006.01)*       **G01G 19/08** *(2006.01)*
**B60W 30/02** *(2006.01)*

(21) Numéro de dépôt: **07112056.2**

(22) Date de dépôt: **09.07.2007**

(54) **Véhicule comportant des moyens de détermination de la pente sur laquelle il se déplace**

Fahrzeug mit Mitteln zum Ermitteln einer Neigung, auf die es sich bewegt

Vehicle comprising means for determining the slope on which it moves

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **28.08.2006 FR 0607603**

(43) Date de publication de la demande:
**05.03.2008 Bulletin 2008/10**

(73) Titulaire: **ROBERT BOSCH GMBH**
**70442 Stuttgart (DE)**

(72) Inventeur: **Bouchard, Christophe**
**95100, ARGENTEUIL (FR)**

(74) Mandataire: **Hurwic, Aleksander Wiktor et al**
**Bosch Systemes de Freinage**
**Service Brevets**
**126, rue de Stalingrad**
**93700 Drancy (FR)**

(56) Documents cités:
**EP-A- 1 387 153      DE-A- 19 728 769**
**DE-A1- 10 245 270      DE-C1- 4 446 358**

EP 1 894 800 B1

**Description**

L'invention concerne un véhicule selon le préambule de la revendication 1.

Un tel véhicule est connu du document DE 197 28 769 A1.

Les véhicules automobiles actuels sont équipés de systèmes d'aide à la conduite, notamment d'anti-blocage des roues (ABS), de contrôle de trajectoire (ESP) et/ou d'anti-patinage des roues motrices (ASR) qui sont susceptibles, en fonction des circonstances, de moduler l'effort de freinage appliqué à chaque roue du véhicule ou de générer un effort de freinage.

Les systèmes de contrôle de trajectoire sont en particulier conçus pour estimer en temps réel et en cours de roulage la charge du véhicule, c'est-à-dire son poids total, pour tenir compte de la charge estimée dans l'ajustement des interventions réalisées.

Toutefois, l'estimation de la charge dépend de l'estimation de la pente de la voie routière sur laquelle circule le véhicule et cette estimation de pente est actuellement peu précise, un moyen connu étant d'équiper le véhicule d'un capteur d'inclinaison, ce qui présente l'inconvénient d'augmenter le coût du système et sa complexité.

L'invention a pour but d'éviter ces inconvénients, grâce à un procédé de détermination de la pente qui soit simple, efficace et économique.

A cet effet, l'invention a pour objet un véhicule selon la revendication 1.

La détermination de la pente consiste à mesurer la variation de la vitesse du véhicule sur la pente à l'occasion d'un découplage entre le moteur et la transmission reliée aux roues motrices du véhicule, et de déduire de cette variation une valeur estimée de la pente par comparaison de cette variation à des courbes d'étalonnage pré-établies ou, avantageusement, par calcul à partir d'un module mathématique.

Ce procédé permet une détermination relativement précise et rapide de la pente de la voie routière à partir d'informations qui sont disponibles et dont l'acquisition ne nécessite pas l'installation d'un capteur supplémentaire.

Avantageusement, la variation de la vitesse du véhicule sur la pente est déterminée à l'occasion d'un changement de rapport de transmission, pendant l'intervalle de temps correspondant au découplage entre le moteur et les roues motrices.

Selon une autre caractéristique de l'invention, ce procédé consiste également à déterminer, avantageusement par calcul, la masse du véhicule en déplacement sur la pente.

Avantageusement, cette valeur estimée de la pente est ensuite utilisée pour corriger la valeur estimée de la charge véhicule.

Cette meilleure estimation de la charge véhicule, combinée à l'estimation de la pente, permet un fonctionnement des systèmes du type ABS, ESP et ASR, qui est plus précis et mieux adapté aux conditions de déplacement du véhicule.

Dans le mode de réalisation préféré de l'invention, on détermine la variation de vitesse du véhicule à partir des informations fournies par le compteur de vitesse de ce véhicule, ou avantageusement par les capteurs de vitesse de rotation des roues.

Le procédé consiste également à déterminer les moments où le moteur est découplé des roues motrices à partir d'information fournies par le calculateur du dispositif de contrôle de trajectoire ESP, le calculateur d'injection moteur ou autre.

La présente invention a pour objet un véhicule comportant un moteur, un embrayage (E), des roues et des moyens de contrôle de la vitesse de rotation des roues caractérisé en ce qu'il comporte des moyens de mesure de la pente $\alpha$ du véhicule par mesure de l'accélération $\gamma$ du véhicule roulant sur ladite pente, moteur débrayé et en ce qu'il comporte des moyens de traitement calculant la pente $\alpha$ par rapport à l'horizontale qui est déterminée par la formule

$$\alpha = \mathrm{Arc}\ \sin((\gamma - g\,K\,\mathrm{roll} - K\,v^2/m_e)/g)$$

où $\gamma$ est l'accélération du véhicule mesurée,
g = 9,8 ms$^{-2}$, K roll est la résistance au roulement du véhicule, K est la résistance aérodynamique du véhicule,
v est la vitesse du véhicule et $m_e$ est la masse estimée du véhicule.

La présente invention a aussi pour objet un véhicule caractérisé en ce qu'il comporte des moyens de détermination de la masse m du véhicule en fonction de la pente mesurée.

La présente invention a aussi pour objet un véhicule caractérisé en ce qu'il comporte une unité hydraulique de commande de freins hydrauliques disposés au niveau des roues assurant la diminution individuelle de la vitesse de rotation des roues lorsqu'elle dépasse la vitesse désirée pour que le véhicule suive la trajectoire désirée par le conducteur.

L'invention sera mieux comprise, et d'autres caractéristiques, détails et avantages de celle-ci apparaîtront plus clairement à la lecture de la description qui suit, faite à titre d'exemple en référence aux dessins annexés dans lesquels :

La figure 1 représente, sous forme de schémas-blocs, la structure d'un véhicule automobile équipé d'un moyen de détermination de pente selon l'invention ;
La figure 2 est un organigramme représentant les différentes étapes du procédé selon l'invention.

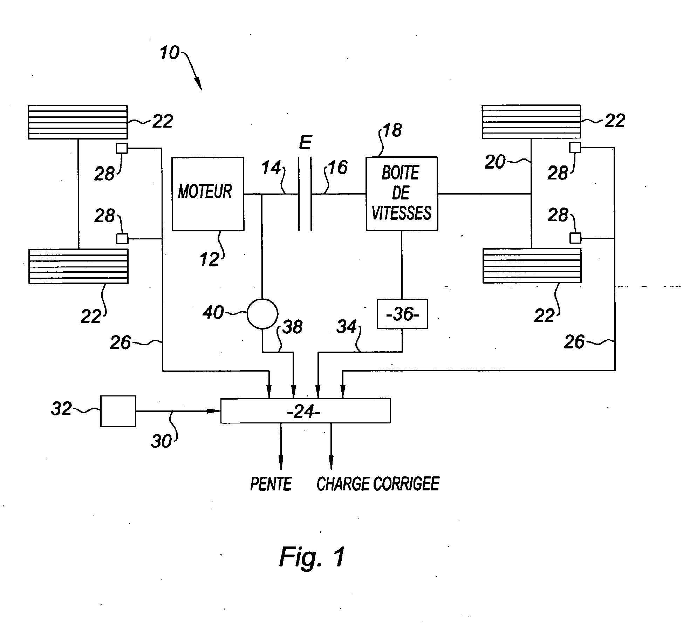

En figure 1, la référence 10 désigne, de façon générale, un véhicule automobile, dont le moteur à combustion interne 12 entraîne par l'intermédiaire d'un embrayage E reliant son arbre de sortie 14 à l'arbre d'entrée 16 d'une boîte de vitesse 18 et d'une transmission 20, les roues 22 du véhicule.

Les moyens de détermination de la pente selon l'invention comprennent des moyens 24 de traitement de l'information, qui reçoivent en entrée un signal 26 de vitesse du véhicule fourni par un capteur 28 de vitesse de rotation des roues 22, un signal 34 d'ouverture de l'embrayage, fourni par des moyens 36 de changement de rapport de transmission (qui peuvent être commandés par le conducteur du véhicule ou qui peuvent être automatisés dans le cas d'une boîte de vitesses robotisée) et/ou un signal 38 de vitesse de rotation de l'arbre de sortie du moteur, fourni par un capteur approprié 40.

Avantageusement, le calculateur ESP, par ailleurs associé à une unité hydraulique munie, de manière connue, d'une pompe hydraulique et des vannes reliées aux freins, joue le rôle des moyens 24 de traitement d'information.

La détermination d'un intervalle de temps pendant lequel le moteur est découplé des roues motrices peut se faire en effet, soit à partir des informations relatives à l'état des moyens 36 de changement de rapport de transmission, soit par comparaison de la vitesse 26 du véhicule et de la vitesse de rotation du moteur, un rapport non linéaire de variation de ces deux vitesses indiquant que le moteur est découplé des roues motrices du véhicule.

La variation de la vitesse du véhicule pendant l'intervalle de temps où l'embrayage E est ouvert, est une donnée qui permet de calculer la pente de la voie routière sur laquelle le véhicule se déplace.

En effet, la somme des forces appliquées au véhicule $\Sigma F$ est égale au produit de la masse m du véhicule en charge par l'accélération $\gamma$:

$$\Sigma F = m\gamma$$

La somme des forces est égale à la somme de la résistance au roulement F roll drag, de la trainée aérodynamique F aéro et la force F slope résultant de l'accélération de la pesanteur sur une pente d'angle $\alpha$ par rapport à l'horizontale.

$$F = mg\ K\ roll$$

g étant égal à 9,8 ms$^{-2}$
K roll étant une constante du véhicule que l'on peut mesurer lors de la conception du véhicule.

$$F\ a\acute{e}ro = Kv^2$$

K étant une constante aérodynamique du véhicule et v la vitesse du véhicule

$$F\ slope = mgsin\alpha$$

On en déduit que

$$\alpha = arc\ sin\ ((\gamma - g\ K\ roll - K\ v^2/m)/g)$$

A première vue, nous sommes en présence d'une indétermination dans la mesure ou $\alpha$ dépend de la masse m du véhicule dont on ne connaît que les valeurs extrêmes, c'est-à-dire la masse à vide et la masse à pleine charge du véhicule.

En examinant les valeurs de décélération en fonction de la vitesse, une pluralité des pentes du tableau ci-dessus on s'aperçoit que, de manière surprenante, pour des vitesses faibles, la masse a une influence négligeable sur la décélération :

| vitesse (km/h) | Model : charge (kg): 1650 - Pente (%) : 0 | Model : charge (kg): 1930 - Pente (%) : 0 | Model : charge (kg): 1650 - Pente (%) : 5 | Model : charge (kg): 1930 - Pente (%) : 5 |
|---|---|---|---|---|
| 0 | 0,14 | 0,14 | 0,63 | 0,63 |
| 18 | 0,14 | 0,14 | 0,63 | 0,63 |
| 36 | 0,16 | 0,16 | 0,65 | 0,65 |
| 54 | 0,19 | 0,19 | 0,68 | 0,68 |
| 72 | 0,24 | 0,22 | 0,73 | 0,71 |
| 90 | 0,29 | 0,27 | 0,79 | 0,76 |
| 108 | 0,36 | 0,33 | 0,85 | 0,82 |

On peut donc calculer avec une précision suffisante, la pente $\alpha$ en prenant pour m une valeur moyenne.

En variante, on détermine la pente $\gamma$ par comparaison des valeurs mesurées avec les valeurs d'un tableau d'étalonnage analogue au tableau 1 mais comportant des informations sur toutes les pentes susceptibles de devoir être mesurées.

A partir de la valeur de la pente $\alpha$ on calcule la masse effective du véhicule correspondant à la masse à vide augmentée de la charge du véhicule.

La connaissance de la masse effective du véhicule permet d'améliorer le contrôle de trajectoire du véhicule.

Dans un premier exemple de réalisation on déduit de la masse la valeur réelle de la traîne s'opposant à l'avancement du véhicule pour augmenter la valeur du couple de freinage pour les freins jusqu'à la limite réelle du patinage.

Ainsi, selon l'invention, on réduit les distances d'arrêt du véhicule.

Dans un deuxième exemple de réalisation, le seuil d'intervention du dispositif de contrôle de trajectoire ESP intervient de manière optimisée en courbe sur basse adhérence, par exemple sur sol mouillé ou verglacé.

Dans un troisième exemple de réalisation, on modifie en fonction de la masse du véhicule les seuils de déclenchement de l'ESP.

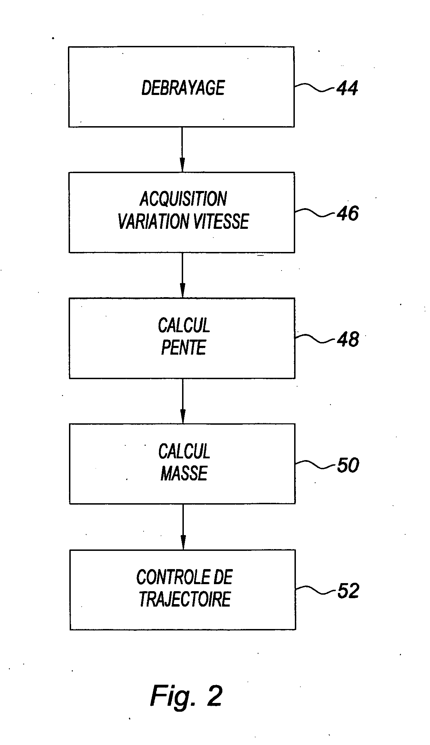

Les principales étapes du procédé selon l'invention sont représentées schématiquement en figure 2.

La première étape 44 est la détection d'un débrayage.

L'étape suivante 46 comprend l'acquisition de la variation de la vitesse du véhicule pendant l'intervalle de temps où le moteur est débrayé. On peut par exemple mesurer la vitesse du véhicule à deux instants différents et diviser la différence de vitesse par l'intervalle de temps entre ces deux instants ou bien procéder par dérivation du signal de vitesse du véhicule.

Simultanément, l'étape 48 consiste en un calcul de la pente $\alpha$.

A partir de la valeur de la pente, on calcule la masse totale du véhicule en roulement.

La valeur corrigée de la charge est ensuite prise en compte par les systèmes du type ABS, ESP et ASR pour un ajustement de leurs interventions 52.

**Revendications**

1. Véhicule comportant un moteur (12), un embrayage (E), des roues (22), des moyens de contrôle de la vitesse de rotation des roues et des moyens de mesure de la pente $\alpha$ du véhicule par mesure de l'accélération $\gamma$ du véhicule roulant sur ladite pente, moteur (12) débrayé **caractérisé en ce qu'**il comporte des moyens de traitement (24) calculant la pente $\alpha$ par rapport à l'horizontale qui est déterminée par la formule

$$\alpha = \text{Arc sin} ( (\gamma - g \, K \, roll - K \, v^2 / m_e) / g )$$

où $\gamma$ est l'accélération du véhicule mesurée,

g = 9,8 ms$^{-2}$, K roll est la résistance au roulement du véhicule, K est la résistance aérodynamique du véhicule, v est la vitesse du véhicule et $m_e$ est la masse estimée du véhicule.

2. Véhicule selon la revendication 1 **caractérisé en ce qu'**il comporte des moyens de détermination de la masse m du véhicule en fonction de la pente mesurée.

3. Véhicule selon la revendication 1 ou 2 **caractérisé en ce qu'**il comporte une unité hydraulique de commande de freins hydrauliques disposés au niveau des roues (22) assurant la diminution individuelle de la vitesse de rotation des roues (22) lorsqu'elle dépasse la vitesse désirée pour que le véhicule suive la trajectoire désirée par le conducteur.

**Claims**

1. Vehicle comprising an engine (12), a clutch (E), wheels (22), means for monitoring the rotational speed of the wheels, and means for measuring the gradient $\alpha$ of the vehicle by measuring the acceleration $\gamma$ of the vehicle running along the said gradient, with the engine (12) disengaged **characterized in that** it comprises processing means (24) calculating the gradient $\alpha$ with respect to the horizontal as determined by the formula:

$$\alpha = \mathrm{Arc\ sin}((\gamma - g\ K\ \mathrm{roll} - K\ v^2\ /\ m_e)\ /\ g)$$

where $\gamma$ is the measured acceleration of the vehicle,
$g = 9.8\ \mathrm{ms}^{-2}$, Kroll is the rolling resistance of the vehicle, K is the aerodynamic resistance of the vehicle, v is the speed of the vehicle and $m_e$ is the estimated mass of the vehicle.

2. Vehicle according to Claim 1, **characterized in that** it comprises means for determining the mass m of the vehicle as a function of the measured gradient.

3. Vehicle according to Claim 1 or 2, **characterized in that** it comprises a hydraulic control unit for operating hydraulic brakes which are positioned at the wheels (22) in order individually to reduce the rotational speed of the wheels (22) when this speed exceeds the speed desired for ensuring that the vehicle follows the path desired by the driver.

**Patentansprüche**

1. Fahrzeug mit einem Motor (12), einer Kupplung (E), Rädern (22), Mitteln zur Steuerung der Drehgeschwindigkeit der Räder und Mitteln zur Messung der Neigung $\alpha$ des Fahrzeugs durch Messung der Beschleunigung $\gamma$ des auf der Neigung fahrenden Fahrzeugs bei ausgekuppeltem Motor (12), **dadurch gekennzeichnet, dass** es Verarbeitungsmittel (24) aufweist, die die Neigung $\alpha$ in Bezug auf die Horizontale berechnen, die durch die Formel

$$\alpha = \mathrm{Arc\ sin}\,((\gamma - g\ K\ \mathrm{roll} - K\ v^2\ /\ m_e)\ /\ g)$$

bestimmt wird, wobei $\gamma$ die gemessene Fahrzeugbeschleunigung,
$g = 9{,}8\ \mathrm{ms}^{-2}$, K roll der Fahrzeugrollwiderstand, K der aerodynamische Widerstand des Fahrzeugs, v die Fahrzeuggeschwindigkeit und $m_e$ die geschätzte Fahrzeugmasse ist.

2. Fahrzeug nach Anspruch 1, **dadurch gekennzeichnet, dass** es Mittel zur Bestimmung der Masse m des Fahrzeugs in Abhängigkeit von der gemessenen Neigung aufweist.

3. Fahrzeug nach Anspruch 1 oder 2, **dadurch gekennzeichnet, dass** es eine Hydraulikeinheit zur Steuerung von auf Höhe der Räder (22) angeordneten Hydraulikbremsen aufweist, die bei einer Überschreitung der gewünschten Geschwindigkeit die individuelle Verringerung der Drehgeschwindigkeit der Räder (22) gewährleistet, damit das Fahrzeug der von dem Fahrer gewünschten Bahn folgt.

*Fig. 1*

Fig. 2

**EP 1 894 800 B1**

**RÉFÉRENCES CITÉES DANS LA DESCRIPTION**

**Documents brevets cités dans la description**

- DE 19728769 A1